# EUROPEAN PATENT APPLICATION

(11) **EP 1 211 870 A1**
(43) Date of publication of application: **05.06.2002**
(21) Application number: 00610123.2
(22) Date of filing: 30.11.2000
(51) Int. Cl.: H04M 1/02

(54) **Device and method for attaching an accessory device to a portable communications apparatus**

(71) Applicant: TELEFONAKTIEBOLAGET LM ERICSSON (publ), 126 25 Stockholm (SE)
(72) Inventor: Gärdenfors, Torbjörn, 211 50 Malmö (SE); Borgström, Anders, 239 32 Skanör (SE)
(74) Representative: Boesen, Johnny Peder

(57) **Abstract**

A connecting device (5; 15; 31) for connecting an accessory device (7; 32) to a portable communications device (1) is equipped with means (11; 18; 37) for holding the accessory device in a position at a side of the portable communications device (1). When the accessory device is held in a position at a side of the portable communications device, the extension of the communications device in its longitudinal direction, and thus the risk of breakage, is avoided. It is no longer needed to store the accessory device separately. The connecting device may comprise an electrotextile having conductive fibres woven together with traditional non-conducting fibres. The electrotextile provides softness and at the same time the possibility of having electric connections in the material.

## Description

### Technical Field of the Invention

The invention relates to a connecting device for connecting an accessory device to a portable communications device, said connecting device having an interface connector for electrical connection to a mating connector arranged on the portable communications device. The invention further relates to an accessory device connectable to a portable communications device and to the use of an electrotextile for connecting an accessory device to a portable communications device.

### Description of Related Art

Portable communications devices, such as mobile telephones, are often used together with different types of accessory devices. Examples of such accessory devices could be audio players, keyboards, hands-free functions, digital cameras, printers, etc. An accessory device is typically connected to the portable communications device through an interface or system connector, often located at an end of the portable communications device. This connector provides electrical contact as well as mechanical support for the accessory device which thus extends the portable communications device in its longitudinal direction.

This means that there is a risk that the accessory device may break off from the portable communications device, e.g. if the user sits down with the combination of the two devices attached to his belt. The accessory device may also break when the combined device is dropped on the floor because of heavy impact due to the weight of the communications device. Further, at least some accessory devices, such as e.g. keyboards, have dimensions relatively large compared to the communications device itself, which makes the combination of the two devices quite unhandy.

These drawbacks often have the consequence that the accessory device is only mounted on the portable communications device during the periods where it is actually needed or wanted. When it is not in use, it will typically be stored separately from the communications device, which means that it may not be available when needed. It may also be lost or difficult to find. Alternatively, the functions of the accessory device could be integrated into the portable communications device, but then the user would have to buy a special device instead of adding the functionality to an existing communications device. Further, the user often wants to be able to choose between a number of different accessory functions, which requires separate accessory devices.

Therefore, it is an object of the invention to provide a connecting device of the above-mentioned type which allows the advantages of the separate accessory devices to be maintained while at the same time avoiding the above-mentioned drawbacks, such as the risk of breaking the accessory device off from the portable communications device.

### Summary

According to the invention the object is achieved in that the connecting device is further equipped with means for holding the accessory device in a position at a side of the portable communications device.

When the accessory device is held in a position at a side of the portable communications device, the extension of the communications device in its longitudinal direction, and thus the risk of breakage, is avoided. It is no longer needed to store the accessory device separately because the storage in the position at the side of the portable communications device is very convenient. Should the user want to utilize the function of another accessory device, an exchange of devices can still be performed easily. Thus, the user gets the impression of an integrated solution without sacrificing the advantages of the concept of separate devices.

When the connecting device comprises a soft material, additional protection against impact is provided to the accessory device due to the softness of the connecting device.

In an expedient embodiment the soft material is an electrotextile having conductive fibres woven together with traditional non-conducting fibres, wherein the conductive fibres provide electrical connection between the accessory device and the interface connector. The electrotextile provides the softness and at the same time the possibility of having electric connections in the material.

When the connecting device comprising the electrotextile has at least one pressure sensitive area, in which two conductors provided by said conductive fibres are adapted to connect to each other when subjected to pressure, thus creating an input signal detectable by the accessory device, a key or button can be created in the electrotextile, thus providing additional operational functions for the accessory device.

In one embodiment of the invention the accessory device is a device for playback of audio signals. This allows the portable communications device, possibly by use of a headset, to be used also for audio listening between calls. In this situation the connecting device may further be provided with means for holding at least one portable storage medium adapted to store audio files for the audio playback device, which provides the user with additional audio files to select between.

In an alternative embodiment the connecting device is provided with several pressure sensitive areas, each area constituting a key of a keyboard. In this way a keyboard, which can be used as e.g. a chatboard in connection with the portable communications device, is provided. In this case the accessory device may comprise electronic control circuitry for said keyboard. Further, the keyboard may be foldable. This means that the keyboard, when not in use, can be folded together so that its size corresponds to that of the portable communications device, and it can be held in a position at e.g. the rear side of the portable communications device.

When the connecting device comprises a flexible section enabling the accessory device to be positioned in at least two different positions in relation to the portable communications device, the accessory device can be placed in a rest position at e.g. the rear side of the portable communications device and a use position different therefrom.

In an expedient embodiment of the invention the portable communications device is a mobile telephone.

As mentioned, the invention also relates to an accessory device connectable to a portable communications device. The accessory device has an interface connector for electrical connection to a mating connector arranged on the portable communications device. When the accessory device comprises an electrotextile having conductive fibres woven together with traditional non-conducting fibres, said conductive fibres providing electrical connection to the interface connector, and the electrotextile is further equipped with means for holding the accessory device in a position at a side of the portable communications device, the extension of the communications device in its longitudinal direction with the accessory device, and thus the risk of breakage, is avoided, and the electrotextile provides softness and at the same time the possibility of having electric connections in the material.

When the electrotextile has at least one pressure sensitive area, in which two conductors provided by said conductive fibres are adapted to connect to each other when subjected to pressure, thus creating an input signal detectable by the accessory device, a key or button can be created in the electrotextile, thus providing additional operational functions for the accessory device.

In one embodiment of the invention the accessory device is a device for playback of audio signals. This allows the portable communications device, possibly by use of a headset, to be used also for audio listening between calls. In this situation the accessory device may further be provided with means for holding at least one portable storage medium adapted to store audio files for the audio playback device, which provides the user with additional audio files to select between.

In an alternative embodiment the accessory device is provided with several pressure sensitive areas, each area constituting a key of a keyboard. In this way a keyboard, which can be used as e.g. a chatboard in' connection with the portable communications device, is provided. The keyboard may be foldable. This means that the keyboard, when not in use, can be folded together so that its size corresponds to that of the portable communications device, and it can be held in a position at e.g. the rear side of the portable communications device.

When the accessory device comprises a flexible section enabling it to be positioned in at least two different positions in relation to the portable communications device, the accessory device can be placed in a rest position at e.g. the rear side of the portable communications device and a use position different therefrom.

In an expedient embodiment of the invention the portable communications device is a mobile telephone.

As mentioned, the invention also relates to the use of an electrotextile having conductive fibres woven together with traditional non-conducting fibres for connecting an accessory device to a portable communications device, wherein the electrotextile is provided with an interface connector for electrical connection to a mating connector arranged on the portable communications device, and means for holding the accessory device in a position at a side of the portable communications device. In this way an extension of the communications device in its longitudinal direction with the accessory device, and thus the risk of breakage, is avoided, and the electrotextile provides softness and at the same time the possibility of having electric connections in the material.

### Brief Description of the Drawings

The invention will now be described more fully below with reference to the drawings, in which
figure 1 shows a front view of a first embodiment of the invention,
figure 2 shows a side view of the embodiment of the invention from figure 1,
figure 3 shows a rear view of the embodiment of the invention from figure 1,
figure 4 shows a rear view of an alternative solution,
figure 5 shows a front view of a second embodiment of the invention,
figure 6 shows a side view of the embodiment of the invention from figure 5,
figure 7 shows a rear view of the embodiment of the invention from figure 5,
figure 8 shows an example of how connections may be implemented with an electrotextile,
figure 9 shows an example of how a pressure sensitive area may be implemented in an electrotextile,
figure 10 shows shows a front view of a third embodiment of the invention,
figure 11 shows a side view of the embodiment of the invention from figure 10, and
figure 12 shows a rear view of the embodiment of the invention from figure 10.

### Detailed Description of Embodiments

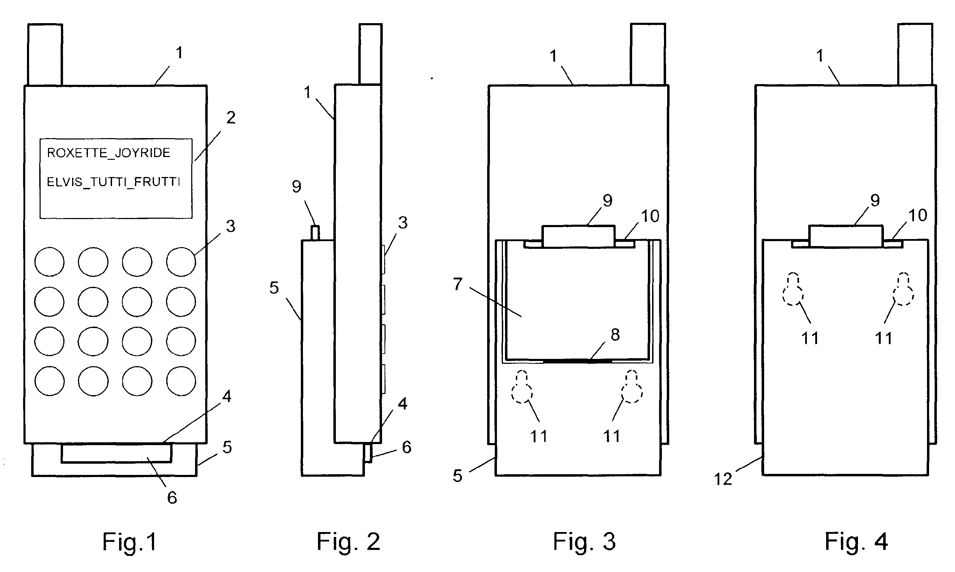

Figures 1-3 show an example of how the invention may be implemented. A mobile telephone 1 is equipped with a display 2 and a number of keys 3. The keys 3 are used for the operation of the telephone, and messages to the user can be presented on the display 2. At the bottom end of the phone a system or interface connector is located. It is indicated by the reference number 4, but not directly visible in the figures. This connector is used for connection of the phone to different types of accessory devices.

An accessory device 7, which is a device for playback of audio signals in this example, is connected to the connector 4 by means of a holder or connecting device 5. The holder 5 has a connector 6 mating with the connector 4 on the telephone 1, and it is further connected to the accessory device 7 through a connector 8. A memory card 9 having audio files stored thereon can be inserted into a slot 10 in the playback device 7. As can be seen, the holder 5 is designed to hold the device 7 in a position at the rear side of the mobile telephone 1, thus avoiding the usual situation where the accessory device extends the telephone in its longitudinal direction. The holder 5 is secured to the telephone partly by means of the connectors 4, 6, but normally further securing means will be provided. These means could have many different (and well known) forms. As an example, holes 11 in the rear side of the telephone 1 are indicated. Corresponding guide pins (not shown) on the holder 5 can be inserted into the holes 11 to keep the holder in position. The holder 5 can be made of either a hard or a soft material, in both cases typically a plastics material. A holder of a soft material provides additional protection against impact.

In the example shown the playback device 7 is used for the playback of music. User instructions are given to the device by means of the keys 3 and selected titles are shown on the display 2.

As an alternative solution, which is shown in figure 4, the accessory device and the holder may be combined to one device 12, which means that the accessory device 12 itself is designed to be held in a position at the rear side of the telephone 1. Again the device is secured by the connectors 4, 6 and the holes 11. Front and side views are identical to those of figures 1 and 2.

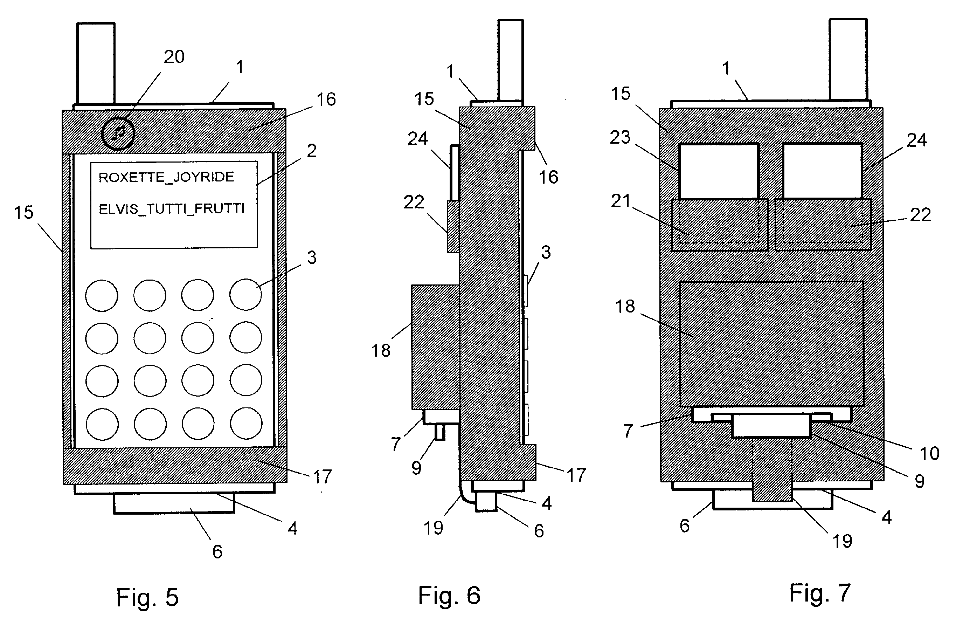

A different embodiment of the invention is shown in figures 5 to 7. Again, a mobile telephone 1 having a display 2, a number of keys 3 and a system or interface connector 4 is shown. Also here a playback device 7 is connected to the telephone as an accessory device and held in a position at the rear side of the telephone 1 by means of a holder. However, in this embodiment the holder is provided in the form of a wrapper 15 made of a soft material carefully designed to match the phone. The wrapper fits around the phone as well as the playback device 7, and in this way the latter is held in a fixed position at the rear side of the phone. The wrapper is secured to the mobile telephone by means of sections 16 and 17 covering the front side of the phone, while the playback device 7 could be held in position by a pocket 18 in the wrapper.

In the shown embodiment the soft material is an electrotextile. Electrotextile is a new technology of fabrics where minute conductive fibres are woven or knitted together with traditional non-conducting fibres. The electrotextile also provides the electrical connection 19 from the playback device 7 to the connector 6 mating with the connector 4 of the phone.

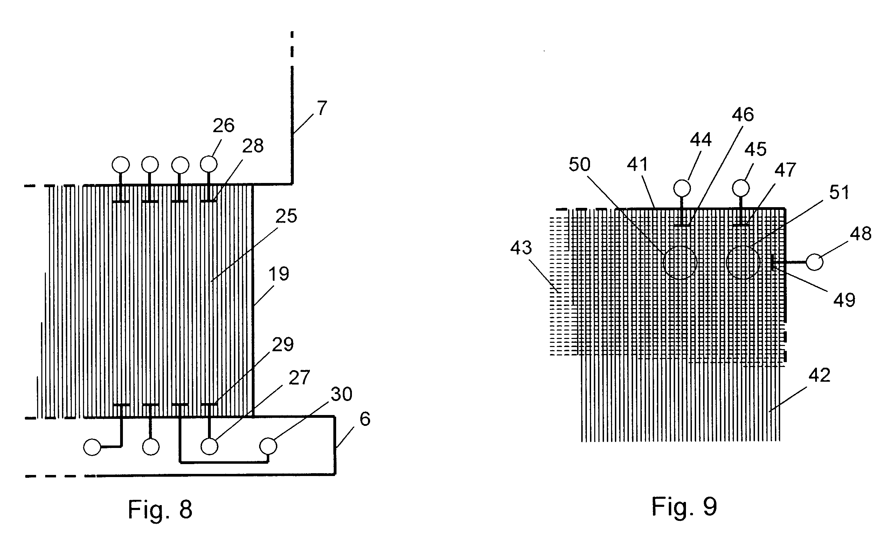

Figure 8 illustrates how the electrical connection 19 from the playback device 7 to the connector 6 can be implemented by means of an electrotextile having conductive fibres 25 running in parallel to each other in one direction only. In the figure the conductive fibres 25 are shown as visible on one side of the connection 19 for illustrative purposes, although they will normally be arranged protected in the middle of the textile, i.e. surrounded by traditional non-conducting fibres. The electrotextile is arranged so that the longitudinal direction of the conductive fibres 25 is from the device 7 to the connector 6, and a connection from e.g. the terminal 26 of the device 7 to a terminal 27 of the connector 6 utilizes a number of conductive fibres which are connected to the terminals 26 and 27 through small connection elements 28 and 29, respectively. If the terminals of e.g. the connector 6 are not spaced with the same module as the connection elements 29, they may be reached by internal connections in the connector, as shown for the terminal 30.

If the electrotextile has two layers of conductive fibres woven-in in perpendicular directions with a semi-insulating layer arranged therebetween, a touch and/or pressure sensitive area may be created. This is illustrated in figure 9, in which a corner of an electrotextile 41 is shown. One layer of conductive fibres 42 is arranged with the fibres in one direction, while the fibres 43 of another layer are arranged in a direction perpendicular to the fibres 42. The two layers are separated from each other by a semi-insulating layer (not shown). Some of the fibres 42 are connected to the terminal 44 and others to the terminal 45 through the connection elements 46 and 47, respectively, while some of the fibres 43 are connected to the terminal 48 through the connection element 49. In the area 50 the fibres from the terminal 44 cross the fibres from the terminal 48. When the area 50 is pressed, the semi-insulating layer between the fibres will change its resistance, and thus also the resistance between the terminals 44 and 48 will change.

Similarly, the resistance between the terminals 45 and 48 will change when the area 51 is pressed. The change in resistance can be detected by an electronic circuit, and thus the areas 50 and 51 can be used as keys or pushbuttons which can be utilized by the user for giving instructions to the device.

In figures 8 and 9 several conducting fibres are connected to each terminal. However, depending on the dimensions of the conducting fibres embodiments are also possible in which only one conducting fibre is connected to each terminal.

As is mentioned above, touch and pressure sensitive areas can be provided in the electrotextile, and such areas can be used to add additional functions as a supplement to the functions which can be obtained with the keys 3 on the mobile telephone. As an example, a key 20 provided as a touch and pressure sensitive area in the electrotextile is shown in figure 5. This key could be used e.g. to enable the playback device with a single press on the key. The pressure sensitive area is connected to the device by conductors which are also provided by the conductive fibres in the electrotextile.

Similarly to the embodiment shown in figures 1 to 3, also here the playback device 7 has a slot 10 into which a memory card 9 having audio files stored thereon can be inserted for playback of the audio files. Additional memory cards, which allow the user to select between a number of different cards, can be carried in the pockets 21 and 22 placed on or in the wrapper. In this way several cards can be carried safely without the risk of losing them.

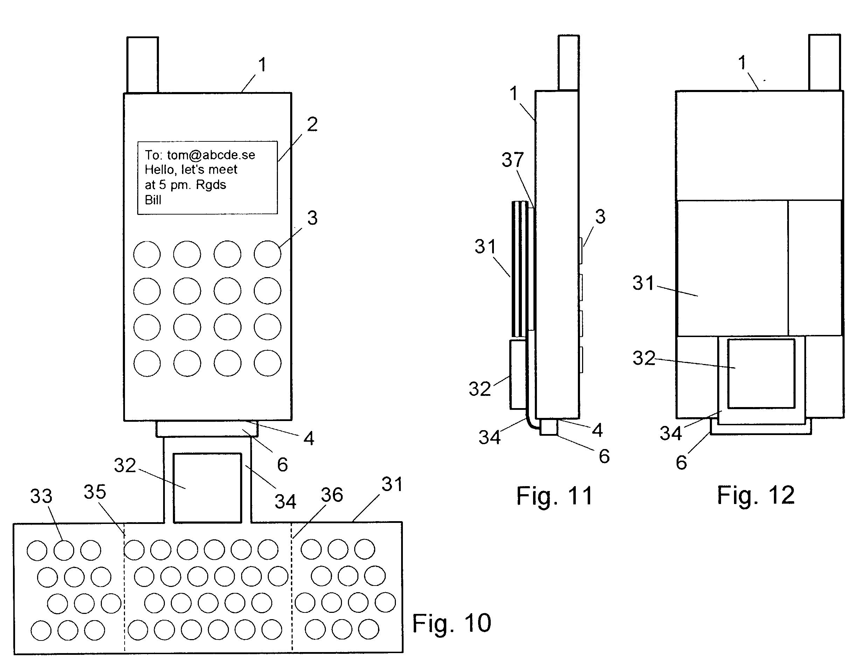

A further embodiment of the invention is shown in figures 10 to 12. In this embodiment the accessory device is a keyboard or a so-called chatboard 31, which can be used together with the mobile telephone 1 e.g. for sending SMS messages to another mobile telephone. For people sending many of these messages such a chatboard is much more convenient than using the normal keys 3 of the telephone, because often a key has to be pressed three or four times for each letter in a message. Like in the previous figures, the mobile telephone 1 has a display 2 on which messages can be presented, a number of keys 3 for the normal operation of the telephone and a system or interface connector 4 for connection to accessory devices.

In figure 10 the keyboard 31 is shown in a position of use. The keyboard itself is made of an electrotextile of the same type as described above, while control circuitry for the keyboard is located in the electronics package 32, which is kept in place and supported by the electrotextile. Electrical connections from the control circuitry 32 to the connector 6 and to the keys 33 of the keyboard are provided by the conducting fibres of the electrotextile in the connecting section 34. The keys 33 of the keyboard are also provided by means of the electrotextile structure, as was described above. When a certain area of the textile is pressed, a connection of two wires is performed, which can be detected by the control circuitry 32.

When not in use, the keyboard 31 can be folded together along the folding lines 35 and 36 and kept in place at the rear side of the mobile telephone 1, as is shown in the figures 11 and 12. The folding lines 35 and 36 are selected such that the keyboard 31, when folded, is in alignment with the exterior design of the telephone. This gives an impression of the keyboard being integrated into the telephone while it can still be disconnected therefrom at any time.

In order to keep the folded keyboard 31 in the position at the rear side of the telephone, fastening means, e.g. in the form of a velcro 37, are attached to the rear side of the keyboard 31 and the rear side of the phone 31. Alternatively, holes similar to the holes 11 of figure 3 can be placed in the phone and corresponding pins arranged on the keyboard 31. Many other types of well-known fastening means could be used to secure the keyboard in its position at the rear side of the telephone.

Although a preferred embodiment of the present invention has been described and shown, the invention is not restricted to it, but may also be embodied in other ways within the scope of the subject-matter defined in the following claims. As an example, the interface connector need not be located at the bottom end of the device, and the accessory device can be placed on another side different from the rear side. Further, the accessory device may be used together with other types of communications devices, such as e.g. PDA's (Personal Digital Assistants) instead of the mobile telephone.

## Claims

1. A connecting device (5; 15; 31) for connecting an accessory device (7; 32) to a portable communications device (1), said connecting device having an interface connector (6) for electrical connection to a mating connector (4) arranged on the portable communications device (1),
**characterized in that** the connecting device (5; 15; 31) is further equipped with means (11; 18; 37) for holding the accessory device in a position at a side of the portable communications device (1).

2. A connecting device according to claim 1, **characterized in that** it comprises a soft material.

3. A connecting device according to claim 2, **characterized in that** the soft material is an electrotextile having conductive fibres (25; 42, 43) woven together with traditional non-conducting fibres, said conductive fibres (25) providing electrical connection between the accessory device and the interface connector (6).

4. A connecting device according to claim 3, **characterized in that** it has at least one pressure sensitive area (20; 33; 50, 51) in which two conductors provided by said conductive fibres (42, 43) are adapted to connect to each other when subjected to pressure, thus creating an input signal detectable by the accessory device.

5. A connecting device according to any one of claims 1-4, **characterized in that** the accessory device is a device (7) for playback of audio signals.

6. A connecting device according to claim 5, **characterized in that** it is further provided with means (21, 22) for holding at least one portable storage medium (23, 24) adapted to store audio files for the audio playback device (7).

7. A connecting device according to claim 4, **characterized in that** it is provided with several pressure sensitive areas (33; 50, 51), each area constituting a key of a keyboard (31).

8. A connecting device according to claim 7, **characterized in that** the accessory device comprises electronic control circuitry (32) for said keyboard (31).

9. A connecting device according to claim 7 or 8, **characterized in that** said keyboard (31) is foldable.

10. A connecting device according to any one of claims 1-9, **characterized in that** it comprises a flexible section (19; 34) enabling the accessory device (7; 32) to be positioned in at least two different positions in relation to the portable communications device (1).

11. A connecting device according to any one of claims 1-10, **characterized in that** the portable communications device (1) is a mobile telephone.

12. An accessory device (7, 15; 31) connectable to a portable communications device (1), said accessory device having an interface connector (6) for electrical connection to a mating connector (4) arranged on the portable communications device (1),
**characterized in that** the accessory device (7, 15; 31) comprises an electrotextile having conductive fibres (25; 42, 43) woven together with traditional non-conducting fibres, said conductive fibres (25) providing electrical connection to the interface connector (6), and that the electrotextile is further equipped with means (16, 17; 37) for holding the accessory device in a position at a side of the portable communications device (1).

13. An accessory device according to claim 12, **characterized in that** the electrotextile has at least one pressure sensitive area (20; 33; 50, 51) in which two conductors provided by said conductive fibres (42, 43) are adapted to connect to each other when subjected to pressure, thus creating an input signal detectable by the accessory device.

14. An accessory device according to claim 12 or 13, **characterized in that** the accessory device is a device (7) for playback of audio signals.

15. An accessory device according to claim 14, **characterized in that** it is further provided with means (21, 22) for holding at least one portable storage medium (23, 24) adapted to store audio files for the audio playback device (7).

16. An accessory device according to claim 13, **characterized in that** it is provided with several pressure sensitive areas (33; 50, 51), each area constituting a key of a keyboard (31).

17. An accessory device according to claim 16, **characterized in that** said keyboard (31) is foldable.

18. An accessory device according to any one of claims 12-17, **characterized in that** it comprises a flexible section (19; 34) enabling the accessory device to be positioned in at least two different positions in relation to the portable communications device (1).

19. An accessory device according to any one of claims 12-18, **characterized in that** the portable communications device (1) is a mobile telephone.

20. Use of an electrotextile having conductive fibres (25) woven together with traditional non-conducting fibres for connecting an accessory device (7; 32) to a portable communications device (1), wherein the electrotextile is provided with
• an interface connector (6) for electrical connection to a mating connector (4) arranged on the portable communications device (1), and
• means (18; 37) for holding the accessory device (7; 32) in a position at a side of the portable communications device (1).
